Europäisches Patentamt

(19) European Patent Office

Office européen des brevets

(11) Numéro de publication: **0 143 708**
**B1**

(12) **FASCICULE DE BREVET EUROPÉEN**

(45) Date de publication du fascicule du brevet:
16.03.88

(21) Numéro de dépôt: **84402373.9**

(22) Date de dépôt: **21.11.84**

(51) Int. Cl.⁴: **F 16 D 55/224,** F 16 D 65/12,
F 16 D 55/26, F 16 H 57/00,
F 16 D 3/06

(54) **Frein multidisque perfectionne.**

(30) Priorité: **30.11.83 FR 8319139**

(43) Date de publication de la demande:
**05.06.85 Bulletin 85/23**

(45) Mention de la délivrance du brevet:
**16.03.88 Bulletin 88/11**

(84) Etats contractants désignés:
**DE GB IT NL SE**

(56) Documents cité:
**EP-A-0 117 815**
**FR-A-2 548 302**
**GB-A-1 087 988**
**US-A-3 008 547**

(73) Titulaire: **BENDIX France, 126, rue de Stalingrad,
F-93700 Drancy (FR)**

(72) Inventeur: **Thioux, Alain, 9 Allée des Bordes,
F-94430 Chennevieres (FR)**

(74) Mandataire: **Poidatz, Emmanuel, Division
Technique Service Brevets Bendix Europe 126,
rue de Stalingrad, F-93700 Drancy (FR)**

LIBER, STOCKHOLM 1988

## Description

L'invention se rapporte à un frein multidisque, et plus précisément à un frein du type comprenant un premier disque rotatif solidaire de la roue du véhicule et un second disque rotatif monté avec possibilité de coulissement en direction axiale sur un élément de support également solidaire de la roue, ledit second disque et ledit élément de support comportant à cet effet des cannelures complémentaires à profil en dents d'engrenage dont l'engrènement mutuel assure l'entraînement en rotation du second disque par l'élément de support tout en autorisant leur déplacement relatif en direction axiale, ainsi qu'un ensemble de patins de friction portant des garnitures de friction susceptibles d'être appliquées sur les faces des disques par un dispositif d'actionnement tel qu'un vérin hydraulique à étrier, ces garnitures ne s'étendant que sur un secteur angulaire limité du pourtour des disques.

La Demanderesse a déjà exposé, dans sa demande de Brevet Françsis No FR-A-2 548 302 publié le 4 janvier 1985, comment dans ce genre de frein le disque coulissant présente une tendance à basculer lors des opérations de freinage qui peut, dans certains cas, conduire à un coincement de ce disque sur son support, et a proposé d'en améliorer le guidage afin d'éliminer cet inconvénient; la solution consistant, dans le cas où le disque coulissant repose sur un moyeu par l'intermédiaire d'un manchon cannelé, à agencer des surfaces de guidage annulaires coopérantes au-delà des extrémités des oannelures afin de s'opposer efficacement au basculement du disque.

Cette solution, qui donne d'excellents résultats dans le cas des freins pour poids lourds seul pris en considération dans la demande de brevet précitée, est cependant inapplicable dans celui de freins pour véhicules de tourisme en raison de le place plus limitée dont on dispose pour le montage du frein.

Le document GB-A-1 087 988 montre et décrit deux disques coulissant l'un par rapport à l'autre et comportant des projections axiales sur un des disques et coopérant avec des ouvertures formées sur l'autre disque. Cet agencement, bien qu'assurant l'entraînement en rotation n'assure pas le guidade radial des projections, celui-ci étant assuré par des portions cylindriques placées en vis à vis sur les deux disques et assurant guidage et coulissement. Cette disposition ne permet pas l'allongement de la distance entre les zones de guidage pour éviter efficacement les risques de coincement par basculement du disque.

La présente invention se donne en conséquence pour but d'imaginer un système de guidage du disque coulissant qui, tout en s'opposant efficacemant à sa tendance au basculement lors d'une opération de freinage, n'accroisse pas ou pas sensiblement l'encombrement général du frein.

Dans ce but, l'invention propose un frein multidisque, comprenant un premier disque rotatif solidaire de la roue du véhicule et un second disque rotatif monté avec possibilité de coulissement en direction axiale sur un élément de support également de la roue, ledit second disque et ledit élément de support comportant à cet effet des cannelures complémentaires à profil en dents déngrenage dont l'engrènement mutuel assure l'entraînement en rotation du second disque par l'élément de support tout en autorisant leur déplacement relatif en direction axiale, ainsi qu'un ensemble de patins de friction portant des garnitures de friction susceptibles d'être appliquées sur les faces des disques par un dispositif d'actionnement tel qu'un vérin hydraulique à étrier, ces garnitures ne s'étendent que sur un secteur angulaire limité du pourtour des disques, en outre un agencement de guidage supplémentaire en translation du second disque le long de l'élément de support étant prévu, cet agencement étant constitué des projections d'orientation axiale et de répartition circonférentielle formées d'une seule pièce avec l'un des disques et s'engageant dans des ouvertures de forme complémentaire ménagées dans l'autre disque, caractérisé par le fait que les projections et les ouvertures sont distribuées sur le pourtour intérieur des disques, à proximité des cannelures qui le solidarisent en rotation avec son élément de support, et que les projections portées par l'un des disques et les ouvertures ménagées dans l'autre disque présentent des sections en forme générale de boutonnières incurvées et en ce que les projections ne sont en contact que par leurs faces extérieures avec les parois correspondantes des ouvertures de l'autre disque, tandis qu'un certain jeu est ménagé en direction radiale et circonférentiellement entre leurs faces et les parois correspondantes desdites overtures.

On comprend que grâce à l'invention, on obtient un guidage correct du disque coulissant sans ajouter à l'encombrement radial du frein.

Les caractéristiques et avantages de l'invention ressortiront plus clairement de la description qui va suivre d'une forme préférentielle de réalisation, donnée à simple titre d'exemple illustratif et avec référence aux dessins ci-annexés, en lesquels:

- la Fig. 1 représente en coupe longitudinale schématique un frein construit selon l'invention; et

- la Fig. 2 est une coupe transversale partielle selon la ligne II-II de la Fig. 1.

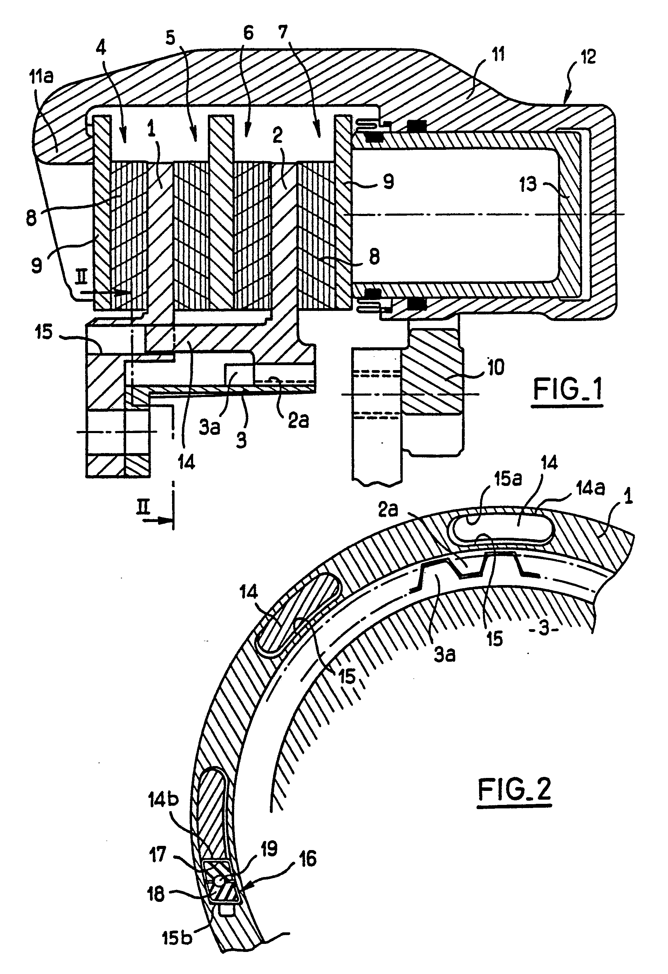

Le frein multidisque représenté à la figure 1 des dessins comporte un premier disque rotatif 1 fixé à la roue (non représentée) du véhicule de manière à l'accompagner dans sa rotation, et un second disque rotatif 2 monté avec possibilité de coulissement en direction axiale sur un élément de support 3 également solidaire de la roue. A cet effet, le disque 2 est muni sur son pourtour intérieur d'une rangée continue de cannelures 2a profilées en forme de dents d'engrenage, qui coopèrent avec des cannelures 3a de forme complémentaire garnissant le pourtour extérieur de l'élément de support cylindrique 3; l'engrèmenet mutuel des cannelures 2a, 3a assure l'entraînement en rotation du disque 2 par l'élément de support 3 tout en autorisant leur déplacement relatif en direction axiale.

Chacun des disques de frein 1 et 2 coopère avec une paire de patins de friction respectivement 4, 5 et 6, 7 disposés de part et d'autre du disque-correspondant, et susceptibles d'être appliqués contre les faces latérales de celui-ci. Chacun de ces patins comprend lui-même une garniture de friction 8 fixée sur une plaque porte-garniture 9, laquelle est elle-même montée avec possibilité de coulissement parallèlement à l'axe du frein sur un support fixe 10 solidaire d'une partie non rotative de l'essieu.

Un étrier flottant 11 est disposé par-dessus les disques de frein 1, 2 et leurs patins de friction 4, 5, 6, 7 de façon à coiffer l'ensemble. Dans la partie de l'étrier 11 située du côté du disque coulissant 2 est prévu un dispositif d'actionnement tel qu'un vérin hydraulique 12 dont le piston 13 est susceptible d'agir sur la plaque porte-garniture 9 du patin interieur 7 et, par reaction et grace a son nez échancré 11a, sur la plaque porte-garniture 9 du patin extérieur 4, de manière à commander le serrage de l'ensemble disques-patins suivant la direction axiale et à créer ainsi un couple de freinage entre chaque garniture et la face de disque conjuguée. Cette action s'accompagne d'un déplacement du disque 2 parallèlement à l'axe par coulissement le long de l'élément de support 3, ce coulissement étant autorisé ainsi qu'exposé plus haut par le présence des cannelures 2a, 3a.

Du fait cependant que les patins de friction ne recouvrent qu'un secteur angulaire limité du pourtour des disques, l'actionnement du frein a pour effet socondaire d'appliquer au disque coulissant 2 un couple de basculement dans le plan du dessin qui, risque dans certaines conditions de provoquer un matage et un coincement des cannelures, compromettant ainsi le bon fonctionnement du frein.

Pour éviter cet inconvénient, la présente invention prévoit d'améliorer le guidage en translation du disque coulissant 2 en munissant cellui-ci d'une rangée circulaire de projections 14 d'orientation axiale, ces projections sensiblement équidistantes les unes autres en direction circonférentielle étant dirigées vers le disque 1 et s'engageant dans des ouvertures 15 de forme complémentaire ménagées dans cellui-ci. On comprend aisement à la lecture de la Fig. 1 des dessins ci-annexés que les parois en contact mutuel des projections 14 et des ouvertures 15 constituent alors des surfaces de guidage qui absorbent le couple de basculement s'exerçant sur le disque coulissant 2, ceci d'autant mieux que les contraintes imposées à ces surfaces sont réduites proportionnellement à la longueur du bras de levier représenté par lesdites projections. Bien que les projections 14 puissant être portées en principe par l'un ou par l'autre disque, ou encore en partie par l'un et en partie par l'autre, il paraît cependant préférable, pour obentir le meilleur effet de guidage possible dans un minimum d'encombrement, de les disposer sur le disque coulissant 2 en les distribuant le long de son pourtour intérieur, à proximité des cannelures 2a.

Les projections 14 sont réalisées d'une seule pièce (par moulage) avec le disque 2 et l'on peut alors avantageusement leur donner une section en forme générale de boutonnière incurvée comme illustré à la Fig. 2 des dessins. Les ouvertures 15, qui peuvent être réalisées par exemple par fraisage dans la base du disque 1, épousent alors elles-mêmes la forme des boutonnières incurvées. Le contact entre projectiors et ouvertures est assuré par les seules faces extérieures (convenablement rectifiées) 14a des premières avec les parois correspondantes 15a des secondes, tandis qu'un certain jeu est au contraire ménagé en direction radiale aussi bien que circonférentielle entre les autres faces des projections et les parois en regard des ouvertures. Il convient de remarquer que les déplacements en translation du disque 2 par rapport au disque 1 provoquent un nettoyage permanent des surfaces 14a, 15a en contact mutuel, ce qui maintient en bon état de propreté les surfaces de guidage en dépit de toutes les causes possibles d'encrassement ou de corrosion.

Pour éviter enfin que le jeu circonférentiel laissé entre les projections 14 et les ouvertures 15 ne donne naissance à des phénomès de battement indésirables, il paraît indiqué de prévoir un dispositif générateur de couple tendant à maintenir en appui mutuel l'un des flancs latéraux de chacune des projections 14 avec les parois correspondantes des ouvertures 15, ceci dans le sens où s'effectue la transmission du couple de freinage. Ce dispositif, indiqué en 16 sur la Fig. 2 des dessins, peut par exemple consister en une masse élastique comprimée et insérée entre le flanc latéral 14b non transmetteur de couple d'une des projections 14, ce flanc étant convenablement dressé au lieu d'être arrondi, et la paroi correspondante 15b, dressée elle aussi, de l'ouverture 15 qui y est associée. Avantageusement, cette masse élastique est elle-même constituée de deux blocs 17, 18 en matière élastomère recouverts sur trois de leurs côtés par des lamelles de tôle destinées à faciliter leur introduction dans le logement ainsi ménagé entre les parois 14b et 15b, ces blocs étant ensuite maintenus écartés l'un de l'autre par une cheville 19 introduite à force dans un canal longitudinal défini entre leurs faces en regard.

## Revendications

1. Frein multidisque, comprenant un premier disque rotatif (1) solidaire de la roue du véhicule et un second disque rotatif (2) monté avec possibilité de coulissement en direction axiale sur un élément de support (3) également solidaire de la roue, ledit second disque (2) et ledit élément de support (3) comportant à cet effet des cannelures complémentaires (2a; 3a) à profil en dents d'engrenage dont l'engrènement mutuel assure l'entraînement en rotation du second disque (2) par l'élément de support (3) tout en autorisant leur déplacement relatif en direction axiale, ainsi qu'un ensemble de patins de friction (4, 5, 6, 7) portant des garnitures de friction (8) susceptibles d'être appliquées sur les faces des disques (2; 3) par un dispositif d'actionnement tel qu'un vérin hydraulique à étrier (12), ces garnitures (8) ne s'étendant que sur un secteur angulaire limité du pourtour des disques (2, 3), en outre un agencement de guidage supplémentaire en translation du second disque (2) le long de l'élément de support (3) étant prévu, cet agencement étant constitué de projections (14) d'orientation axiale et de répartition circonférentielle réalisées d'une seule pièce avec l'un des disques (2) et s'engageant dans des ouvertures (15) de forme complémentaire ménagées dans l'autre disque (1), caractérisé par le fait que les projections (14) et les ouvertures (15) sont distribuées sur le pourtour intérieur des disques, à proximité des cannelures (2a) qui le solidarisent en rotation avec son élément de support (3), et que les projections (14) portées par l'un des disques et les ouvertures (15) ménagées dans l'autre disque présentent des sections en forme générale de boutonnières incurvées et en ce que les projections (14) ne sont en contact que par leurs faces extérieures (14a) avec les parois correspondantes (15a) des ouvertures (15) de l'autre disque (1), tandis qu'un certain jeu est ménagé en direction radiale et circonférentielle entre leurs faces et les parois correspondantes desdites ouvertures.

2. Frein selon la revendication 1, caractérisé par le fait qu'est inséré, entre un flanc latéral (14b) d'une au moins des projections (14) et la paroi en regard (15b) de l'ouverture (15) correspondante, un dispositif générateur de couple (16) tendant à maintenir projections et ouvertures en appui mutuel dans le sens circonférentiel correspondant à la transmission du couple de freinage.

3. Frein selon la revendication 2, caractérisé par le fait que ledit dispositif consiste en une masse élastique comprimée et insérée entre ledit flanc latéral (14b) et ladite paroi (15b).

4. Frein selon la revendication 3, caractérisé par le fait que ladite masse élastique est composée de deux blocs (17, 18) de matière élastomère maintenus écartés l'un de l'autre par une cheville (19) ou autre cale d'espacement.

**Patentansprüche**

1. Mehrscheibenbremse mit einer ersten Bremsscheibe (1), die mit dem Fahrzeugrad fest verbunden ist, und einer zweiten Bremsscheibe (2), die axial gleitbar auf einem ebenfalls mit dem Fahrzeugrad fest verbundenen Bremsträgerteil (3) angebracht ist, wobei die zweite Bremsscheibe (2) und das Bremsträgerteil (3) zu diesem Zweck komplementäre Nuten (2a; 3a) mit einem Verzahnungsprofil aufweisen, dessen gegenseitiger Eingriff den Drehantrieb der zweiten Bremsscheibe (2) durch das Bremsträgerteil (3) sicherstellt, während er ihre axiale Relativverschiebung erlaubt, sowie mit einer Anordnung von Bremsbacken (4, 5, 6, 7), die Reibbeläge (8) aufweisen, welche gegen die Flächen der Bremsscheiben (2; 3) durch eine Betätigungsvorrichtung wie einen hydraulischen Bremsmotors eines Bremssattels (12) andrückbar sind, wobei sich diese Reibbeläge (8) nur über einen begrenzten Winkelsektor des Umfangs der Bremsscheiben (2, 3) erstrecken, wobei ferner eine Einrichtung zum zusätzlichen Führen der Translationsbewegung der zweiten Bremsscheibe (2) entlang des Bremsträgerelementes (3) vorgesehen ist, welche von axial ausgerichteten und in Umfangsrichtung verteilten Vorsprüngen (14) gebildet wird, die einstückig mit einer der Bremsscheiben (2) ausgebildet sind und in komplementär geformte Öffnungen (15) der anderen Bremsscheibe (1) greifen, dadurch gekennzeichnet, daß die Vorsprünge (14) und die Öffnungen (15) über den Innenumfang der Bremsscheiben nahe den Nuten (2a) verteilt sind, welche sie mit ihrem Bremsträgerelement (3) drehfest verbinden, und daß die von einer der Bremsscheiben getragenen Vorsprünge (14) und die in der anderen Bremsscheibe gebildeten Öffnungen (15) Querschnitte in Form abgerundeter Knopflöcher haben, und daß die Vorsprünge (14) nur an ihren Außenflächen (14a) mit den entsprechenden Wänden (15a) der Öffnungen (15) der anderen Bremsscheibe (1) in Berührung stehen, während ein gewisses Spiel in radialer Richtung und in Umfangsrichtung zwischen ihren Flächen und den entsprechenden Wänden der Öffnungen vorgesehen ist.

2. Bremse nach Anspruch 1, dadurch gekennzeichnet, daß zwischen einem Seitenrand (14b) mindestens einer der Vorsprünge (14) und der gegenüberliegenden Wand (15b) der entsprechenden Öffnung (15) eine drehmomenterzeugende Vorrichtung (16) eingesetzt ist, welche dazu dient, die Vorsprünge und Öffnungen in der entsprechenden Umfangsrichtung zur Übertragung des Bremsmomentes in gegenseitiger Anlage zu halten.

3. Bremse nach Anspruch 2, dadurch gekennzeichnet, daß die besagte Vorrichtung aus einer elastischen Masse besteht, welche zwischen dem Seitenrand (14b) und der betreffenden Wand (15b) komprimiert und eingesetzt ist.

4. Bremse nach Anspruch 3, dadurch gekennzeichnet, daß die plastische Masse von zwei Blöcken (17, 18) aus elastomerem Material besteht, welche durch einen Stift (19) oder ein anderes Distanzstück auf Abstand gehalten werden.

**Claims**

1. Multidisk brake comprising a first rotary disk (1) fixed to the wheel of the vehicle and a second rotary disk (2) mounted to be slidably mounted in an axial direction on a support member (3) also fixed to the wheel, said second disk (2) and said support member (3) comprising to this end complementary grooves (2a; 3a) having a toothed profile for mutual engagement to ensure the rotary drive of the second disk (2) by the support member (3) while allowing for relative displacement in an axial direction, and an friction pad assembly (4, 5, 6, 7) carrying friction members (8) adapted to be applied against the faces of the disks (2; 3) by an actuating device like a hydraulic motor of a caliper (12), said friction members (8) extending only about a limited angular section of the circumference of the disks (2, 3), an arrangement for supplementary guidance of translational movement of the second disk (2) along the support member (3) being provided, said arrangement being comprised of axially directed and circumferentially spaced projections (14) integral with the one of the disks (2) and engaging into openings (15) of complementary form provided in the other disk (1), characterized in that the projections (14) and the openings (15) are distributed on the internal circumference of the disks adjacent to the grooves (2a) which fix it for rotation with its support member (3), in that the projections (14) carried by the one of the disks and the openings (15) provided in the other disks have cross-sections in the general form of rounded button holes, and in that the projections (14) are in contact with the corresponding walls (15a) of the openings (15) of the other disk (1) only by their external faces (14a), while a certain play is provided in the radial and circumferential directions between their faces and corresponding walls of said openings.

2. Brake according to claim 1, characterized in that a torque generating device (16) is provided between a lateral edge (14b) of at least one of the projections (14) and the opposite wall (15b) of the corresponding opening (15), said device tending to maintain projections and openings in mutual engagement in the corresponding circumferential sense to transmit the brake torque.

3. Brake according to claim 2, characterized in that said device comprises a resilient mass compressed and inserted between said lateral edge (14b) and said wall (15b).

4. Brake according to claim 3, characterized in that said resilient mass is composed of two blocks (17, 18) of elastomeric material maintaining the one spaced from the other by a pin (19) or other spacing member.

0 143 708

FIG. 1

FIG. 2

1